# EUROPÄISCHE PATENTSCHRIFT

(11) **EP 2 828 690 B1**
(45) Veröffentlichungstag und Bekanntmachung des Hinweises auf die Patenterteilung: **23.01.2019**
(21) Anmeldenummer: 13700917.1
(22) Anmeldetag: 23.01.2013
(51) Int. Cl.: G01V 3/15

(54) **Handortungsgerät**
HAND-HELD LOCATING APPLIANCE
APPAREIL DE LOCALISATION MANUELLE

(30) Priorität: 22.03.2012 DE 102012204580
(43) Veröffentlichungstag der Anmeldung: 28.01.2015
(73) Patentinhaber: Robert Bosch GmbH, 70442 Stuttgart (DE)
(72) Erfinder: KRAPF, Reiner, 70794 Filderstadt (DE)
(86) Internationale Anmeldenummer: PCT/EP2013/051209
(87) Internationale Veröffentlichungsnummer: WO 2013/139503

(56) Entgegenhaltungen:
- EP-A1- 1 298 457
- EP-A1- 2 196 828
- WO-A1-2007/147199
- DE-A1-102008 054 558
- US-A- 5 969 528

## Beschreibung

### Stand der Technik

Es ist bereits ein Handortungsgerät mit einer Recheneinheit, mit einer ersten Ortungsvorrichtung, die dazu vorgesehen ist, ein Ortungsobjekt zumindest in einem ersten Ortungsbereich zu orten, und mit wenigstens einer zweiten Ortungsvorrichtung, die dazu vorgesehen ist, ein Ortungsobjekt in zumindest einem zweiten Ortungsbereich zu orten, vorgeschlagen worden. Solche Handortungsgeräte sind in den Dokumenten EP1298457 und EP2196828 offenbart.

### Offenbarung der Erfindung

Die Erfindung besteht aus einem Handortungsgerät gemäß Anspruch 1 und einem Verfahren zur Ortung gemäß Anspruch 10. Die Erfindung geht aus von einem Handortungsgerät mit einer Recheneinheit, mit einer ersten Ortungsvorrichtung, die dazu vorgesehen ist, ein Ortungsobjekt zumindest in einem ersten Ortungsbereich zu orten, und mit wenigstens einer zweiten Ortungsvorrichtung, die dazu vorgesehen ist, ein Ortungsobjekt in zumindest einem zweiten, insbesondere von dem ersten Ortungsbereich zumindest teilweise verschiedenen Ortungsbereich zu orten.

Es wird vorgeschlagen, dass die Recheneinheit dazu vorgesehen ist, zumindest eine Ortsinformation wenigstens eines der Ortungsobjekte zumindest von einem Ortungsergebnis der ersten Ortungsvorrichtung und einem Ortungsergebnis der zweiten Ortungsvorrichtung abhängig zu bestimmen. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, ein Betriebsprogramm und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Vorteilhaft ist die Recheneinheit als ein Mikroprozessor ausgebildet. Insbesondere soll unter einer "Ortungsvorrichtung" eine Vorrichtung verstanden werden, die bei einem Betrieb insbesondere ein Ortungssignal aussendet und/oder vorteilhaft einen insbesondere von dem Ortungsobjekt reflektierten Anteil des Ortungssignals empfängt. Insbesondere gibt die Ortungsvorrichtung zumindest eine insbesondere elektrische Kenngröße aus, die wenigstens von dem empfangenen Ortungssignal abhängig ist und die vorteilhaft das Ortungsergebnis zu der Recheneinheit transportiert. Insbesondere bestimmt die Ortungsvorrichtung wenigstens, ob sich ein Ortungsobjekt in einem Ortungsbereich der Ortungsvorrichtung befindet. Vorteilhaft weist die Kenngröße zumindest die Ortsinformation über eine Position des Ortungsobjekts relativ zur Ortungsvorrichtung auf. Besonders vorteilhaft bestimmt die Ortungsvorrichtung zumindest eine Entfernung zwischen der Ortungsvorrichtung und dem Ortungsobjekt. Unter "vorgesehen" soll insbesondere speziell programmiert, ausgelegt und/oder ausgestattet verstanden werden. Insbesondere soll unter einem "Ortungsobjekt" ein in einem Werkstück, beispielsweise in einer Wand, verdeckt angeordnetes Bauteil verstanden werden, das sich in zumindest einer elektromagnetischen Eigenschaft von dem Werkstück unterscheidet, beispielsweise eine Stromleitung, eine Wasserleitung, ein Träger, ein Holzbalken und/oder ein Armierungseisen. Vorzugsweise ist das Ortungsobjekt bei einer Ortung von der Ortungsvorrichtung beabstandet angeordnet. Insbesondere soll unter einem "Ortungsbereich" ein Bereich verstanden werden, in dem die Ortungsvorrichtung das Ortungssignal aussendet und/oder vorteilhaft aus dem die Ortungsvorrichtung das Ortungssignal empfängt. Vorzugsweise variiert ein Antennengewinn der Ortungsantenne in Richtung des Ortungsbereichs in einem Betriebszustand und/oder mehreren Betriebszuständen um weniger als 20 dB, besonders bevorzugt weniger als 10 dB. Insbesondere beträgt eine Ortungsreichweite der Ortungsvorrichtung weniger als 100 cm, vorteilhaft weniger als 20 cm. Insbesondere soll unter der Wendung "ein von dem ersten Ortungsbereich zumindest teilweise verschiedener zweiter Ortungsbereich" verstanden werden, dass die zweite Ortungsvorrichtung dazu vorgesehen ist, ein Ortungsobjekt in einem Teil des Ortungsbereichs zu orten, der außerhalb eines Ortungsbereichs der ersten Ortungsvorrichtung angeordnet ist. Vorzugsweise ist der Ortungsbereich der zweiten Ortungsvorrichtung größer als der Ortungsbereich der ersten Ortungsvorrichtung. Vorteilhaft sind die erste Ortungsvorrichtung und die zweite Ortungsvorrichtung dazu vorgesehen, in zumindest einem Betriebszustand in unterschiedliche Richtungen zu orten. Unter einer "Ortsinformation" soll insbesondere eine Objektinformation verstanden werden, die eine Anordnung des Ortungsobjekts relativ zu der Ortungsvorrichtung und insbesondere relativ zu dem Handortungsgerät beschreibt. Insbesondere beschreibt die Ortsinformation zumindest einen Abstand des Ortungsobjekts von der Ortungsvorrichtung. Vorzugsweise bestimmt die Recheneinheit, insbesondere neben dem Abstand, zumindest eine Information, in welcher Richtung das Ortungsobjekt relativ zu der Ortungsvorrichtung angeordnet ist. Besonders vorteilhaft weist die Ortsinformation zumindest eine Information über einen insbesondere quantitativen Abstand der Ortungsvorrichtung zu dem Ortungsobjekt in eine Richtung parallel zu einer Oberfläche des Werkstücks auf. Unter einer "Objektinformation" soll eine, dem Fachmann als sinnvoll erscheinende, von dem Ortungsobjekt abhängige Information verstanden werden, vorzugsweise jedoch eine Ortsinformation, eine Verlaufsinformation, eine Eigenschaftsinformation und/oder eine Plausibilitätsinformation. Vorzugsweise berichtet die Recheneinheit die Objektinformation zur Ausgabe an einen Bediener. Insbesondere bestimmt die Recheneinheit, ob das Ortungsobjekt mittig und/oder außermittig vor der Ortungsvorrichtung angeordnet ist. Vorteilhaft bestimmt die Recheneinheit, ob das Ortungsobjekt mittig, links und/oder rechts von der Hauptstrahlrichtung der Ortungsvorrichtung angeordnet ist. Besonders vorteilhaft bestimmt die Recheneinheit, ob das Ortungsobjekt, mittig, links, rechts, oberhalb und/oder unterhalb von der Hauptstrahlrichtung der Ortungsvorrichtung angeordnet ist. Bevorzugt bestimmt die Recheneinheit einen Winkel, in dem das Ortungsobjekt relativ zu der Hauptstrahlrichtung der Ortungsvorrichtung angeordnet ist. Insbesondere soll unter "mittig vor der Ortungsvorrichtung" verstanden werden, dass das Ortungsobjekt zumindest teilweise auf einer Geraden angeordnet ist, die senkrecht zu einer dem Ortungsobjekt zugewandten Geräteaußenseite des Handortungsgeräts ausgerichtet ist und die die Geräteaußenseite schneidet. Die Richtungen "links, rechts, oberhalb und unterhalb" sind insbesondere von einer Ergonomie des Handortungsgeräts abhängig. Vorzugsweise ist eine Bedieneinheit des Handortungsgeräts unterhalb einer Anzeigeeinheit des Handortungsgeräts angeordnet. Unter einem "Ortungsergebnis" soll insbesondere eine von dem Ortungsobjekt abhängige Information verstanden werden, die insbesondere genau eine der Ortungsvorrichtungen ermittelt. Vorzugsweise ist das Ortungsergebnis der ersten Ortungsvorrichtung von dem Ortungsergebnis der zweiten Ortungsvorrichtung unabhängig. Vorzugsweise sind die erste Ortungsvorrichtung und die zweite Ortungsvorrichtung zumindest teilweise getrennt ausgebildet. Insbesondere soll unter der Wendung "von einem Ortungsergebnis der ersten Ortungsvorrichtung und einem Ortungsergebnis der zweiten Ortungsvorrichtung abhängig bestimmen" verstanden werden, dass die Recheneinheit die Ortungsergebnisse der Ortungsvorrichtungen miteinander verknüpft und vorteilhaft zumindest eine Objektinformation ermittelt, die aus dem Ortungsergebnis einer einzelnen Ortungsvorrichtung unbestimmbar ist. Durch die erfindungsgemäße Ausgestaltung des Handortungsgeräts kann eine hohe Genauigkeit und/oder vorteilhaft eine große Zuverlässigkeit zumindest bei einer Ortsbestimmung des Ortungsobjekts und insbesondere auch bei einer Bestimmung einer Eigenschaftsinformation erreicht werden. Insbesondere kann eine besonders hohe Trennschärfe bei der Ortsbestimmung erreicht werden.

Des Weiteren wird vorgeschlagen, dass die erste Ortungsvorrichtung dazu vorgesehen ist, in zumindest einem ersten und einem zweiten Ortungsteilbereich des ersten Ortungsbereichs getrennt zu orten, wodurch eine Position des Ortungsobjekts besonders genau angegeben werden kann. Vorzugsweise ist die Ortungsvorrichtung dazu vorgesehen, in zumindest zwei Ortungsteilbereichen, vorteilhaft in zumindest drei Ortungsteilbereichen, besonders vorteilhaft in zumindest fünf Ortungsteilbereichen, getrennt zu orten. Alternativ könnte die Ortungsvorrichtung stufenlos entstellbare Ortungsteilbereiche aufweisen. Unter "zumindest teilweise verschieden" soll insbesondere verstanden werden, dass die Ortungsteilbereiche einer einzelnen Ortungsvorrichtung zu weniger als 50 %, vorteilhaft weniger als 20 %, besonders vorteilhaft weniger als 10 %, überlappen. Unter einem "Ortungsteilbereich" soll insbesondere ein Teilbereich des Ortungsbereichs verstanden werden. Unter der Wendung "getrennt orten" soll insbesondere verstanden werden, das die Ortungsvorrichtung dazu vorgesehen ist, in den beiden Ortungsteilbereichen voneinander unabhängig eine Ortung vorzunehmen. Vorzugsweise ortet die Ortungsvorrichtung in einem Betriebszustand in einem der Ortungsteilbereiche und in einem anderen Betriebszustand in einem anderen der Ortungsteilbereiche.

Ferner wird vorgeschlagen, dass die zweite Ortungsvorrichtung dazu vorgesehen ist, in zumindest einem ersten und einem zweiten Ortungsteilbereich des zweiten Ortungsbereichs getrennt zu orten, wodurch eine Position eines Ortungsobjekts und mehrerer Ortungsobjekte besonders genau angegeben werden kann.

Weiterhin ist die Recheneinheit dazu vorgesehen, in einem Betriebszustand die Ortsinformation wenigstens eines der Ortungsobjekte nur auszugeben, wenn die zumindest zwei, vorteilhaft drei oder besonders vorteilhaft vier Ortungsvorrichtungen jeweils das Ortungsobjekt erfassen, wodurch Ortungsfehler vermieden werden können. Unter der Wendung, wenn "die zumindest zwei Ortungsvorrichtungen jeweils das Ortungsobjekte erfassen" soll insbesondere verstanden werden, dass die Recheneinheit die Ortsinformation ausgibt, wenn die erste Ortungsvorrichtung ein von dem Ortungsobjekt reflektiertes, detektierbares Ortungssignal empfängt und zumindest die zweite Ortungsvorrichtung ein von dem Ortungsobjekte reflektiertes, detektierbares Ortungssignal empfängt.

Zudem wird vorgeschlagen, dass die Recheneinheit dazu vorgesehen ist, zumindest eine Verlaufsinformation wenigstens eines der Ortungsobjekte zumindest von einem Ortungsergebnis der ersten Ortungsvorrichtung und einem Ortungsergebnis der zweiten Ortungsvorrichtung abhängig zu bestimmen, wodurch einem Bediener vorteilhaft ein Information über einen Verlauf des Ortungsobjekts ausgegeben werden kann. Insbesondere soll unter einer "Verlaufsinformation" eine Information verstanden werden, die einen Verlauf zumindest einer Haupterstreckungsrichtung eines länglichen Ortungsobjekts zumindest in einem Ortungsbereich der Ortungsvorrichtung relativ zu der Ortungsvorrichtung beschreibt. Vorteilhaft weist die Verlaufsinformation eine Information über eine Form des Ortungsobjektes auf. Beispielsweise könnte die Verlaufsinformation aussagen, dass das längliche Ortungsobjekt aus Sicht des Bedieners von links unter dem Handortungsgerät nach rechts verläuft.

Weiterhin ist die erste Ortungsvorrichtung dazu vorgesehen, wenigstens eines der Ortungsobjekte mit einer ersten Ortungsart zu orten, die von einer zweiten Ortungsart der zweiten Ortungsvorrichtung verschieden ist, wodurch auch verschiedenartige Ortungsobjekte besonders genau geortet werden können. Unter einer "Ortungsart" soll insbesondere ein physikalisches Prinzip verstanden werden, mit dem die Ortungsvorrichtung das Ortungsobjekt ortet. Vorzugsweise ist die Ortungsart als eine induktive Ortung, als eine kapazitive Ortung, als eine Radarortung und/oder als eine Wechselspannungsortung ausgebildet. Unter einer "induktiven Ortung" soll insbesondere eine Ortung verstanden werden, bei der die Ortungsvorrichtung mittels eines insbesondere durch eine Spule aufgebauten Magnetfelds das Ortungsobjekt ortet, und zwar vorteilhaft anhand von unterschiedlich magnetischen Permeabilitäten des Werkstücks und des Ortungsobjekts. Durch die induktive Ortung können vorteilhaft metallische Ortungsobjekte geortet werden, wie beispielsweise Bewehrungsstahl, Schrauben und/oder Leitungen in einer Wand. Unter einer "kapazitiven Ortung" soll insbesondere eine Ortung verstanden werden, bei der die Ortungsvorrichtung mittels eines insbesondere durch eine Kondensatorplatte aufgebauten elektrischen Felds das Ortungsobjekt im Werkstück ortet, und zwar vorteilhaft anhand von unterschiedlich dielektrischen Leitfähigkeiten des Werkstücks und des Ortungsobjekts. Des Weiteren ist die Recheneinheit dazu vorgesehen, aus dem Ortungsergebnis der kapazitiven Ortung der Ortungsvorrichtung eine Information über eine Materialart zumindest des Ortungsobjekts zu bestimmen. Durch die kapazitive Ortung können vorteilhaft nichtmetallische Ortungsobjekte geortet werden, wie beispielsweise Holzbalken und/oder Hohlräume in einer Wand. Unter einer "Radarortung" soll insbesondere eine Ortung verstanden werden, bei der die Ortungsvorrichtung mittels eines durch eine Antenne ausgesendeten hochfrequenten elektromagnetischen Felds das Ortungsobjekt ortet, und zwar vorteilhaft anhand von unterschiedlichen elektromagnetischer Permittivitäten des Werkstücks und des Ortungsobjekts. Vorzugsweise sendet die Ortungsvorrichtung zur Radarortung ein Ortungssignal, das eine Bandbreite von mehr als 500 MHz, vorteilhaft mehr als 1 GHz, besonders vorteilhaft mehr als 2 GHz aufweist. Alternativ könnte die Ortungsvorrichtung ein schmalbandiges Ortungssignal senden. Durch die Radarortung können vorteilhaft metallische und nichtmetallische Ortungsobjekte besonders genau geortet werden. Unter einer "Wechselspannungsortung" soll insbesondere eine Ortung verstanden werden, die eine elektrische Spannung anhand eines von einer Wechselstromleitung und/oder von mehreren Wechselstromleitungen ausgehenden Signals, das insbesondere eine Frequenz von 50 Hz oder 60 Hz aufweist, ortet. Vorzugsweise weist die Ortungsvorrichtung zur Wechselspannungsortung einen Ortungsbereich mit genau einem Ortungsteilbereich auf. Alternativ könnte die Ortungsvorrichtung zur Wechselspannungsortung einen Ortungsbereich mit mehreren Ortungsteilbereichen aufweisen. Durch die Wechselspannungsortung können spannungsführende Stromkabel vorteilhaft geortet werden.

In einer vorteilhaften Ausbildung der Erfindung wird vorgeschlagen, dass die Recheneinheit dazu vorgesehen ist, zumindest eine Eigenschaftsinformation wenigstens eines der Ortungsobjekte zumindest von einem Ortungsergebnis der ersten Ortungsvorrichtung und einem Ortungsergebnis der zweiten Ortungsvorrichtung abhängig zu bestimmen, wodurch die Eigenschaftsinformationen einem Ortungsobjekt zugeordnet werden können, insbesondere wenn mehrere Ortungsobjekte in unterschiedlichen Ortungsbereichen angeordnet sind. Unter einer "Eigenschaftsinformation" soll eine Information verstanden werden, die zumindest eine Materialeigenschaft, eine Materialart und/oder einen Materialzustand des Ortungsobjekts beschreibt. Insbesondere soll unter einer "Materialeigenschaft" eine physikalische Eigenschaft des Ortungsobjekts verstanden werden. Unter "eine Materialart bestimmen" soll insbesondere verstanden werden, dass die Recheneinheit zumindest eine Information bestimmt, die einer Materialart, beispielsweise Holz, Eisen, Kupfer und/oder Stein, zugeordnet ist.

Des Weiteren wird vorgeschlagen, dass die Recheneinheit dazu vorgesehen ist, zumindest eine Plausibilitätsinformation wenigstens von einem Ortungsergebnis der ersten Ortungsvorrichtung und einem Ortungsergebnis der zweiten Ortungsvorrichtung abhängig zu bestimmen, wodurch unplausible Ortungen erkannt und vorteilhaft verworfen bzw. markiert werden können. Unter einer "Plausibilitätsinformation" soll insbesondere eine Information verstanden werden, die eine Glaubwürdigkeit der Objektinformation beschreibt. Vorzugsweise sagt die Plausibilitätsinformation aus, ob eine erste Objektinformation zu einer zweiten Objektinformation passt. Beispielsweise könnte die Plausibilitätsinformation aussagen, dass eine Wechselspannungsortung eine elektrische Spannung, eine induktive Ortung jedoch keine metallischen Ortungsobjekte gefunden hat. Das Weiteren könnte die Plausibilitätsinformation aussagen, dass eine erste Ortungsvorrichtung ein metallisches Ortungsobjekt nur in einem ersten Bereich gefunden hat und eine zweite Ortungsvorrichtung eine Wechselspannung nur in einem zweiten, von dem ersten Bereich verschiedenen Bereich gefunden hat, wobei die Recheneinheit der Plausibilitätsinformation einen Wert zuweist, der die Ortungsergebnisse der Ortungsvorrichtungen als unplausibel kennzeichnet.

Ferner wird vorgeschlagen, dass die Recheneinheit dazu vorgesehen ist, zumindest das Ortungsergebnis der ersten Ortungsvorrichtung und das Ortungsergebnis der zweiten Ortungsvorrichtung unterschiedlich zu gewichten, wodurch eine hohe Genauigkeit und Zuverlässigkeit bei der Bestimmung des Ortungsergebnisses erreicht werden kann. Insbesondere soll unter der Wendung "unterschiedlich gewichten" verstanden werden, dass die Recheneinheit die Ortungsergebnisse der ersten und der zweiten Ortungsvorrichtung vor einer Ausgabe vergleicht, wobei die Recheneinheit bei Unstimmigkeiten das Ortungsergebnis der höher gewichteten Ortungsvorrichtung ausgibt. Vorzugsweise ist die Ortungsvorrichtung höher gewichtet, die eine höhere Zuverlässigkeit bei der Ortung, insbesondere von einer Eigenschaftsinformation abhängig, aufweist.

Zudem wird vorgeschlagen, dass die Recheneinheit dazu vorgesehen ist, unterschiedliche Gewichtungen der Ortungsergebnisse der ersten und der zweiten Ortungsvorrichtung in verschiedenen Betriebsmodi vorzunehmen, wodurch eine Messung, auf die der Betriebsmodus optimiert ist besonders genau und zuverlässig durchgeführt werden kann. Unter der Wendung "unterschiedliche Gewichtungen in verschiedenen Betriebsmodi vornehmen" soll insbesondere verstanden werden, dass die Recheneinheit in einem Betriebszustand ein Ortungsergebnis der ersten Ortungsvorrichtung höher gewichtet und in einem anderen Betriebszustand ein Ortungsergebnis der anderen Ortungsvorrichtung höher gewichtet. Die Betriebsmodi sind vorteilhaft von dem Bediener auswählbar und insbesondere konfigurierbar. Insbesondere sind die Betriebsmodi als dem Fachmann als sinnvoll erscheinende Betriebsmodi ausgebildet, vorteilhaft jedoch als ein Holzortungsmodus, als ein Metallortungsmodus, als ein Stromkabelortungsmodus, als ein Hohlraumortungsmodus und/oder als ein Feinsuchmodus. Die Gewichtung der Ortungsergebnisse erfolgt dabei auf eine, dem Fachmann als sinnvoll erscheinende Art, vorzugsweise jedoch von einem Ortungsteilbereich der Ortungsvorrichtungen, von einem Ortungsbereich und/oder vorteilhaft von einer Ortungsart abgängig.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Handortungsgerät mit einer Recheneinheit und vier Ortungsvorrichtungen, die unterschiedliche Ortungsbereiche aufweisen,
- Fig. 2: ein schematischer Schnitt des Handortungsgeräts aus Figur 1 und Ortungsobjekten,
- Fig. 3: ein Verfahren mit dem Handortungsgerät aus Figur 1,
- Fig. 4: ein alternatives Ausführungsbeispiel des Handortungsgeräts aus Figur 1,
- Fig. 5: ein weiteres alternatives Ausführungsbeispiel des Handortungsgeräts aus Figur 1 und
- Fig. 6: ein viertes Ausführungsbeispiel des Handortungsgeräts aus Figur 1.

### Beschreibung der Ausführungsbeispiele

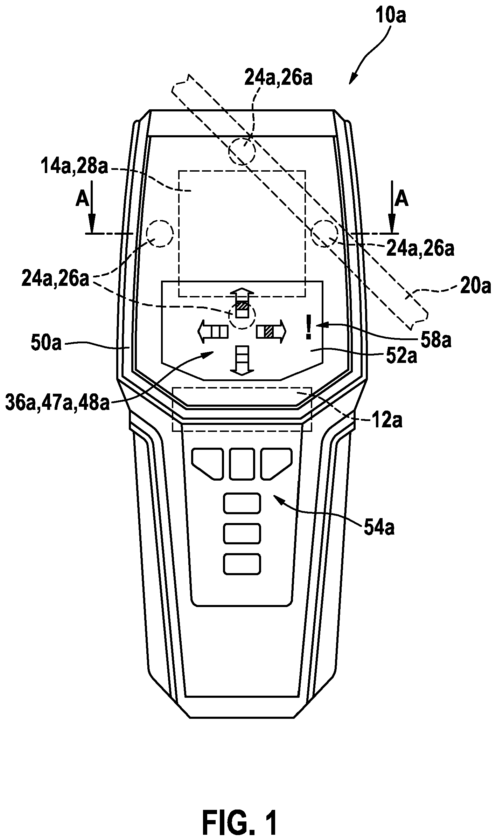

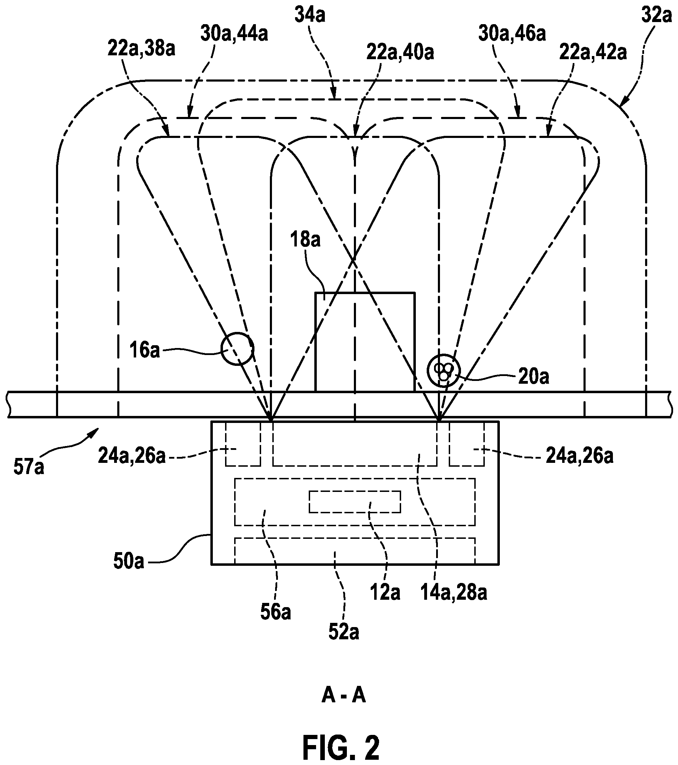

Figur 1 und Figur 2 zeigen ein Handortungsgerät 10a mit einer Recheneinheit 12a, einer ersten Ortungsvorrichtung 14a, einer zweiten Ortungsvorrichtung 24a, einer dritten Ortungsvorrichtung 26a und einer vierten Ortungsvorrichtung 28a. Des Weiteren umfasst das Handortungsgerät 10a ein Gerätegehäuse 50a, eine Anzeigeeinheit 52a, eine Bedieneinheit 54a und eine Geräteelektronik 56a. Die Ortungsvorrichtungen 14a, 24a, 26a, 28a sind dazu vorgesehen, bei einem Betrieb in einem Werkstück 57a verdeckt angeordnete Ortungsobjekte 16a, 18a, 20a in jeweils teilweise unterschiedlichen Ortungsbereichen 22a, 30a, 32a, 34a zu orten. Das Werkstück 57a ist hier als eine Wand ausgebildet. Die Recheneinheit 12a, die Ortungsvorrichtungen 14a, 24a, 26a, 28a und die Geräteelektronik 56 sind in einem Innenraum des Gerätegehäuses 50a angeordnet. Ein Bediener greift und führt bei einer Ortung das Gerätegehäuse 50a. Die Anzeigeeinheit 52a und die Bedieneinheit 54a sind auf einer den Ortungsbereichen 22a, 30a, 32a, 34a abgewandten Seite des Gerätegehäuses 50a angeordnet. Die vier Ortungsvorrichtungen 14a, 24a, 26a, 28a sind dazu vorgesehen, wenigstens die Ortungsobjekte 16a, 18a, 20a mit jeweils unterschiedlichen Ortungsarten zu orten. Die vier Ortungsvorrichtungen 14a, 24a, 26a, 28a sind teilweise einstückig mit der Geräteelektronik 56a ausgebildet.

Die erste Ortungsvorrichtung 14a ist dazu vorgesehen, eine Radarortung vorzunehmen. Dazu weist die erste Ortungsvorrichtung 14a zumindest eine Ortungsantenne auf. Die erste Ortungsvorrichtung 14a sendet ein Ortungssignal aus und empfängt einen an den Ortungsobjekten 16a, 18a, 20a reflektierten Teil des Ortungssignals. Aus dem empfangenen Teil des Ortungssignals bestimmt die Recheneinheit 12a einen Abstand zwischen der Ortungsvorrichtung 14a und den Ortungsobjekten 16a, 18a, 20a. Dazu wertet die Ortungsvorrichtung 14a eine Laufzeit des Ortungssignals und/oder eine Phasenverschiebung zwischen dem gesendeten Ortungssignal und dem empfangenen Ortungssignal aus. Alternativ könnte die Ortungsvorrichtung 14a nur eine Position in einer Richtung parallel zu einer Oberfläche des Werkstücks 57a bestimmen. Die erste Ortungsvorrichtung 14a ortet auf eine, dem Fachmann als sinnvoll erscheinende Art in einem ersten Ortungsteilbereich 38a, einem zweiten Ortungsteilbereich 40a, einem dritten Ortungsteilbereich 42a und in zwei nicht auf der dargestellten Schnittebene liegenden Ortungsteilbereichen des ersten Ortungsbereichs 22a getrennt. Somit bestimmt die erste Ortungsvorrichtung 14a ein erstes Ortungsergebnis, das Informationen über einen Abstand der Ortungsobjekte 16a, 18a, 20a zu der Ortungsvorrichtung 14a und eine Information, in welchem der Ortungsteilbereiche 38a, 40a, 42a die Ortungsobjekte 16a, 18a, 20a angeordnet sind, aufweist.

Die zweite Ortungsvorrichtung 24a ist dazu vorgesehen, eine induktive Ortung in einem zweiten Ortungsbereich 30a vorzunehmen. Dazu weist die zweite Ortungsvorrichtung 24a vier Ortungsmittel auf, die als Spulen ausgebildet sind. Die Ortungsmittel sind an vier unterschiedlichen Seiten der ersten Ortungsvorrichtung 14a angeordnet. Die zweite Ortungsvorrichtung 14a erzeugt magnetische Felder, die bei einer Ortung durch ferromagnetische Ortungsobjekte 16a, hier eine eiserne Stange, beeinflusst werden. Des Weiteren beeinflussen in elektrisch leitfähigen Ortungsobjekten 20a entstehende Wirbelströme das magnetische Feld. Die Recheneinheit 12a ist dazu vorgesehen, ein von einem ferromagnetischen Ortungsobjekt 16a und ein von einem nicht ferromagnetischen, elektrisch leitfähigen Ortungsobjekt 20a reflektiertes Ortungssignal zu unterscheiden. Die Ortungsvorrichtung 14a bestimmt eine Beeinflussung des magnetischen Felds und daraus auf eine, dem Fachmann als sinnvoll erscheinende Art eine zweite Ortsinformation des Ortungsobjekts 16a. Des Weiteren ortet die zweite Ortungsvorrichtung 24a in vier Ortungsteilbereichen 44a, 46a des zweiten Ortungsbereichs 30a, von denen zwei dargestellt sind, getrennt. Jedem Ortungsmittel ist dabei einer der Ortungsteilbereiche 44a, 46a zugeordnet. Somit bestimmt die zweite Ortungsvorrichtung 24a ein zweites Ortungsergebnis, das Informationen über ein Vorhandensein ferromagnetischer Ortungsobjekte 16a in den einzelnen Ortungsteilbereichen 44a, 46a des zweiten Ortungsbereichs 30a aufweist.

Die dritte Ortungsvorrichtung 26a ist dazu vorgesehen, eine Wechselspannungsortung in einem dritten Ortungsbereich 32a vorzunehmen. Dazu ist die dritte Ortungsvorrichtung 26a teilweise einstückig mit der zweiten Ortungsvorrichtung 24a ausgebildet. Die dritte Ortungsvorrichtung 26a empfängt über die Messmittel der zweiten Ortungsvorrichtung 24a ein elektrisches Feld, das von einem unter Spannung stehenden Ortungsobjekt 20a ausgeht. Der Ortungsbereich 32a der dritten Ortungsvorrichtung 26a ist nicht in Ortungsteilbereiche unterteilt. Alternativ könnte ein Ortungsbereich einer induktiv ortenden Ortungsvorrichtung mehrere Ortungsteilbereiche aufweisen. Die dritte Ortungsvorrichtung 26a bestimmt somit ein Ortungsergebnis, das Informationen über ein Vorhandensein eines unter Spannung stehenden Ortungsobjekts 20a in dem dritten Ortungsbereich 32a aufweist.

Die vierte Ortungsvorrichtung 28a ist dazu vorgesehen, eine kapazitive Ortung in einem vierten Ortungsbereich 34a vorzunehmen. Dazu umfasst die vierte Ortungsvorrichtung 28a einen Messaufnehmer, der teilweise einstückig mit der Ortungsantenne der ersten Ortungsvorrichtung 14a ausgebildet ist. Die vierte Ortungsvorrichtung 28a erzeugt elektrische Wechselfelder, mittels derer eine Kapazität des Messaufnehmers gemessen wird. Dabei ist eine Frequenz wesentlich geringer als bei einer Radarortung. In dem vierten Ortungsbereich 34a angeordnete Ortungsobjekte 16a, 18a, 20a verändern eine Kapazität des Messaufnehmers. Die Ortungsvorrichtung 28a erfasst eine Änderung der Kapazität des Messaufnehmers. Die vierte Ortungsvorrichtung 28a bestimmt somit ein Ortungsergebnis, das Informationen über ein Vorhandensein eines Ortungsobjekts 20a in dem Ortungsbereich 34a aufweist.

Die Recheneinheit 12a ist dazu vorgesehen, Ortsinformationen 36a der Ortungsobjekte 16a, 18a, 20a von Ortungsergebnissen mehrerer der Ortungsvorrichtungen 14a, 24a, 26a, 28a abhängig zu bestimmen. Die Ortungsvorrichtungen 14a, 24a, 26a, 28a ermitteln in dem in Figur 2 dargestellten Beispiel, dass das erste Ortungsobjekt 16a innerhalb des ersten Ortungsbereichs 22a, innerhalb des zweiten Ortungsbereichs 30a und außerhalb des vierten Ortungsbereichs 34a angeordnet ist. Zudem erfasst die erste Ortungsvorrichtung 14a, dass das erste Ortungsobjekt 16a innerhalb des ersten Ortungsteilbereichs 38a des ersten Ortungsbereichs 22a angeordnet ist. Des Weiteren erfasst die zweite Ortungsvorrichtung 24a, dass das erste Ortungsobjekt 16a innerhalb des ersten Ortungsteilbereichs 44a des zweiten Ortungsbereichs 30a angeordnet ist. Die Recheneinheit grenzt einen Bereich, in dem das erste Ortungsobjekt 16 angeordnet ist, entsprechend des Ortungsergebnisses und den zugeordneten Ortungsbereichen 22a, 30a, 32a, 34a ein. Hier ist das erste Ortungsobjekt 6a außerhalb des vierten Ortungsbereichs 34a und innerhalb eines Schnittbereichs des ersten Ortungsteilbereichs 38a des ersten Ortungsbereichs 22a und des ersten Ortungsteilbereichs 44a des zweiten Ortungsbereichs 30a angeordnet. Die so ermittelte Ortsinformation 36a des ersten Ortungsobjekts 16a stellt die Recheneinheit 12a auf der Anzeigeeinheit 52a dem Bediener dar.

Die Recheneinheit 12a ist dazu vorgesehen, Verlaufsinformationen 48a der Ortungsobjekte 16a, 18a, 20a von Ortungsergebnissen aller Ortungsvorrichtung 14a, 24a, 26a, 28a abhängig zu bestimmen. Beispielsweise erkennt die Recheneinheit 12, dass das erste Ortungsobjekt 16a sowohl in zwei aneinandergrenzenden Ortungsteilbereichen 40a der ersten Ortungsvorrichtung 14a als auch an zwei aneinandergrenzenden Ortungsteilbereichen 46a der zweiten Ortungsvorrichtung 24a angeordnet ist.

Die Recheneinheit 12a ist dazu vorgesehen, Eigenschaftsinformationen 47a der Ortungsobjekte 16a, 18a, 20a von Ortungsergebnissen mehrerer, insbesondere aller Ortungsvorrichtungen 14a, 24a, 26a, 28a abhängig zu bestimmen. Die dritte Ortungsvorrichtung 26a ermittelt, dass in ihrem Ortungsbereich 32a ein spannungsführendes Ortungsobjekt 20a angeordnet ist. Die zweite Ortungsvorrichtung 24a ermittelt ein Vorhandensein eines ferromagnetischen, metallischen Ortungsobjekts 16a. Die erste Ortungsvorrichtung 24a ermittelt ein Vorhandensein zweier metallischer Ortungsobjekte 16a, 20a. Die Recheneinheit 12a weist dem ferromagnetischen Ortungsobjekt 16a Spannungsfreiheit und dem nicht ferromagnetischen, metallischen Ortungsobjekt 20a eine Wechselspannung zu. Die Recheneinheit 12a zeigt dem Bediener an, dass das nicht ferromagnetische metallische Ortungsobjekt 20a eine Wechselspannung aufweist. Normalerweise weisen Ortungsobjekte 20a, die als Stromkabel ausgebildet sind, Kupfer auf. Da jedoch auch ferromagnetische Ortungsobjekte 20a, hier ein Armierungseisen, eine Spannung transportieren können, zeigt die Recheneinheit 12a dem Bediener ein Warnzeichen 58a an.

Die Recheneinheit 12a erkennt zwei getrennte Ortungsobjekte 16a, 18a, 20a, wenn zwischen zwei Ortungsobjekten ein Ortungsteilbereich eines der Ortungsvorrichtungen 14a, 24a, 26a, 28a liegt, in dem kein Ortungsobjekt geortet wird. Des Weiteren erkennt die Recheneinheit 12a zwei getrennte Ortungsobjekte 16a, 18a, 20a, wenn die Ortungsvorrichtungen 14a, 24a, 26a, 28a unterschiedliche Materialeigenschaften der Ortungsobjekte 16a, 18a, 20a bestimmen.

Die Recheneinheit 12a ist dazu vorgesehen, Plausibilitätsinformationen von Ortungsergebnissen mehrerer, insbesondere aller Ortungsvorrichtungen 14a, 24a, 26a, 28a abhängig zu bestimmen. Wenn die erste Ortungsvorrichtung 14a in einem Bereich ein Ortungsobjekt 18a erfasst, überprüft die Recheneinheit 12a, ob die zweite Ortungsvorrichtung 24a in diesem Bereich ebenfalls ein Ortungsobjekt 18a erfasst. Die Recheneinheit 12a zeigt das Ortungsobjekt 18a in einem Betriebsmodus nur an, wenn beide Ortungsvorrichtungen 14a, 24a das Ortungsobjekt 18a erfassen. Die Recheneinheit 12a zeigt das Ortungsobjekt 18a in einem anderen Betriebsmodus an, wenn nur eine der Ortungsvorrichtungen 14a, 24a das Ortungsobjekt 18a erfasst. Dabei beachtet die Recheneinheit 12a, ob die Ortungsvorrichtungen 14a, 24a, 26a, 28a geeignet sind, das Ortungsobjekt 16a, 18a, 20a zu erfassen. Ein nichtmetallisches Ortungsobjekt 18a kann beispielsweise nur von der ersten Ortungsvorrichtung 14a und der vierten Ortungsvorrichtung 28a erfasst werden.

Die Recheneinheit 12a ist dazu vorgesehen, zumindest die Ortungsergebnisse der Ortungsvorrichtungen 14a, 24a, 26a, 28a unterschiedlich zu gewichten. Dabei ist eine der Ortungsvorrichtungen 14a, 24a, 26a, 28a, die dem Fachmann als sinnvoll erscheint, mit einer höchsten Zuverlässigkeit, insbesondere abhängig von einer Eigenschaft des Ortungsobjekts 16a, 18a, 20a, am höchsten gewichtet. Ein von dieser Ortungsvorrichtung 14a, 24a, 26a, 28a geortetes Ortungsobjekt 16a, 18a, 20a wird auch dann angezeigt, wenn zumindest eine der anderen Ortungsvorrichtungen 14a, 24a, 26a, 28a das Ortungsobjekt 16a, 18a, 20a nicht orten. Vorzugsweise weist die Recheneinheit 12a den Ortungsergebnissen der Ortungsvorrichtungen 14a, 24a, 26a, 28a einen Zuverlässigkeitsindex zu. Hier weist die Recheneinheit 12a den Ortungsvorrichtungen 14a, 24a, 26a, 28a einen Zuverlässigkeitsindex zwischen 0 % und 100 % in Abhängigkeit von der Eigenschaft des Ortungsobjekts 16a, 18a, 20a zu. Die Recheneinheit 12a zeigt dem Bediener ein Ortungsobjekt 16a, 18a, 20a über die Anzeigeeinheit 52a an, wenn eine Summe der Zuverlässigkeitsindexe der Ortungsvorrichtungen 14a, 24a, 26a, 28a, die das Ortungsobjekt 16a, 18a, 20a orten, wenigstens 50 % erreicht.

Die Recheneinheit 12a weist Betriebsroutinen für verschiedene Betriebsmodi auf. In einem ersten Betriebsmodus sind die Ortungsergebnisse der Ortungsvorrichtungen 14a, 24a, 26a, 28a in Abhängigkeit von der Eigenschaft des Ortungsobjekts 16a, 18a, 20a gleich gewichtet. Die erste Ortungsvorrichtung 14a und die vierte Ortungsvorrichtung 28a orten ein Ortungsobjekt 16a, 18a, 20a im Wesentlichen von seinen Eigenschaften unabhängig. Die zweite Ortungsvorrichtung 24a ortet Ortungsobjekte 16a aus ferromagnetischen und anderen Metallen. Die dritte Ortungsvorrichtung 26a ortet Ortungsobjekte 20a, die als spannungsführende Leiter ausgebildet sind. Die Recheneinheit 12a weist der ersten Ortungsvorrichtung 14a und der vierten Ortungsvorrichtung 28a jeweils einen Zuverlässigkeitsindex von 50 % zu, solange die dritte Ortungsvorrichtung 24a und die vierte Ortungsvorrichtung 26a kein Ortungsobjekt orten. Wenn die zweite Ortungsvorrichtung 24a oder die dritte Ortungsvorrichtung 26a ein Ortungsobjekt 16a, 20a orten, weist die Recheneinheit 12a dieser Ortungsvorrichtung 24a, 26a, der ersten Ortungsvorrichtung 14a und der vierten Ortungsvorrichtung 28a jeweils einen Zuverlässigkeitsindex von 33 % zu. In diesem Fall gibt die Recheneinheit 12a die Ortung des Ortungsobjekts 16a, 20a an den Bediener aus, wenn zwei der Ortungsvorrichtungen 14a, 24a, 26a, 28a das Ortungsobjekt 16a, 20a erfassen. Wenn die zweite Ortungsvorrichtung 24a und die dritte Ortungsvorrichtung 26a ein Ortungsobjekt 16a, 20a orten, weist die Recheneinheit den Ortungsvorrichtungen 14a, 24a, 26a, 28a jeweils einen Zuverlässigkeitsindex von 24 % zu. In diesem Fall gibt die Recheneinheit 12a die Ortung des Ortungsobjekts 16a, 20a an den Bediener aus, wenn drei der Ortungsvorrichtungen 14a, 24a, 26a, 28a das Ortungsobjekt 16a, 20a erfassen.

Ein zweiter Betriebsmodus der Recheneinheit 12a ermöglicht eine vorteilhafte Ortung von Ortungsobjekten 18a aus Holz. Die Recheneinheit 12a weist der ersten Ortungsvorrichtung 14a einen Zuverlässigkeitsindex von weniger als 50 %, beispielsweise 49 % und der vierten Ortungsvorrichtung 28a einen Zuverlässigkeitsindex von 50 % zu, wodurch falsche Anzeigen durch Störungen der ersten Ortungsvorrichtung 14a vorteilhaft vermieden werden können. Somit wird ein nur von der ersten Ortungsvorrichtung 14a geortetes Ortungsobjekt nicht angezeigt. Die Recheneinheit 12a weist den Ortungsvorrichtungen 24, 26a, für die ein gesuchtes Ortungsobjekt 18a unortbar ist, einen Zuverlässigkeitsindex von 0 % zu, hier der zweiten Ortungsvorrichtung 24a und der dritten Ortungsvorrichtung 26a. Die Recheneinheit 12a zeigt dem Bediener das Ortungsobjekt 18a an, wenn die vierte Ortungsvorrichtung 28a oder die erste und die vierte Ortungsvorrichtung 14a, 28a das Ortungsobjekte 18a geortet haben. Des Weiteren bestimmt die Recheneinheit mittels der ersten Ortungsvorrichtung 14a die Ortsinformation 36a des Ortungsobjekts 18a innerhalb des Ortungsbereichs 34a der vierten Ortungsvorrichtung 28a.

Ein dritter Betriebsmodus der Recheneinheit 12a ermöglicht eine vorteilhafte Ortung von Ortungsobjekten 18a aus spannungsführenden Ortungsobjekten 20a. Die Recheneinheit 12a weist der dritten Ortungsvorrichtung 26a einen Zuverlässigkeitsindex von 50 % zu. Somit wird jedes spannungsführende Ortungsobjekt 20a im Ortungsbereich 32a angezeigt. Die Recheneinheit 12a bestimmt anhand der ersten, der zweiten und der vierten Ortungsvorrichtung 14a, 24a, 28a eine Position des spannungsführenden Ortungsobjekts 20a. Die Recheneinheit 12a weist jedem der Ortungsvorrichtungen 14a, 24a, 28a, die zumindest zwei Ortungsteilbereiche 38a, 40a 42a, 44a, 46a aufweisen, einen Ortsbestimmungszuverlässigkeitsindex zu. Hier weist die Recheneinheit 12a jeder dieser Ortungsvorrichtungen 14a, 24a, 28a einen Ortsbestimmungszuverlässigkeitsindex von 33 % zu. Somit gibt die Recheneinheit 12a eine Ortsinformation 36a nur aus, wenn zwei der Ortungsvorrichtungen 14a, 24a, 28a übereinstimmend eine Position des Ortungsobjekts 20a in einem Bereich eingrenzen können.

Ein vierter Betriebsmodus der Recheneinheit 12a ermöglicht eine vorteilhafte Ortung von Ortungsobjekten 18a, die ferromagnetisches Material aufweisen. Die Recheneinheit 12a weist der zweiten Ortungsvorrichtung 24a einen bei einer Ortung von ferromagnetisches Material einen Zuverlässigkeitsindex von 50 % zu. Die Recheneinheit 12a grenzt mittels der ersten und der vierten Ortungsvorrichtung 14a, 28a die Ortsinformation 36a ein.

Die Recheneinheit 12a ist somit dazu vorgesehen, unterschiedliche Gewichtungen der Ortungsergebnisse der Ortungsvorrichtungen 14a, 24a, 26a, 28a in verschiedenen Betriebsmodi vorzunehmen. Die Anzeigeeinheit 52a zeigt dem Bediener bei einer Ortung Ortsinformationen 36a, Eigenschaftsinformationen 47a, Verlaufsinformationen 48a und andere, dem Fachmann als sinnvoll erscheinende Informationen an. Die Recheneinheit 12a ist dazu vorgesehen, die durch Ortung ermittelten Informationen von dem eingestellten Betriebsmodus abhängig mittels der Anzeigeeinheit 52a anzuzeigen.

In einer weiteren, hier nicht dargestellten Ausgestaltung weist das Handortungsgerät 10a Bewegungssensoren auf, die eine Gerätebewegung des Handortungsgeräts 10a, insbesondere relativ zu den Ortungsobjekten 16a, 18a, 20a, erfassen. Die Bewegungssensoren weisen Walzen und ein Sensormittel auf, das eine Drehbewegung der Walzen erfasst. Alternativ oder zusätzlich könnte ein Handortungsgerät einen optischen Sensor und/oder einen Beschleunigungssensor aufweisen. Die Recheneinheit 12a speichert die Ortungsergebnisse der Ortungsvorrichtungen 14a, 24a, 26a, 28a in Abhängigkeit von der Gerätebewegung. Die Recheneinheit 12a interpretiert die mit der Gerätebewegung gespeicherten Ortungsergebnisse auf eine, dem Fachmann als sinnvoll erscheinende Art.

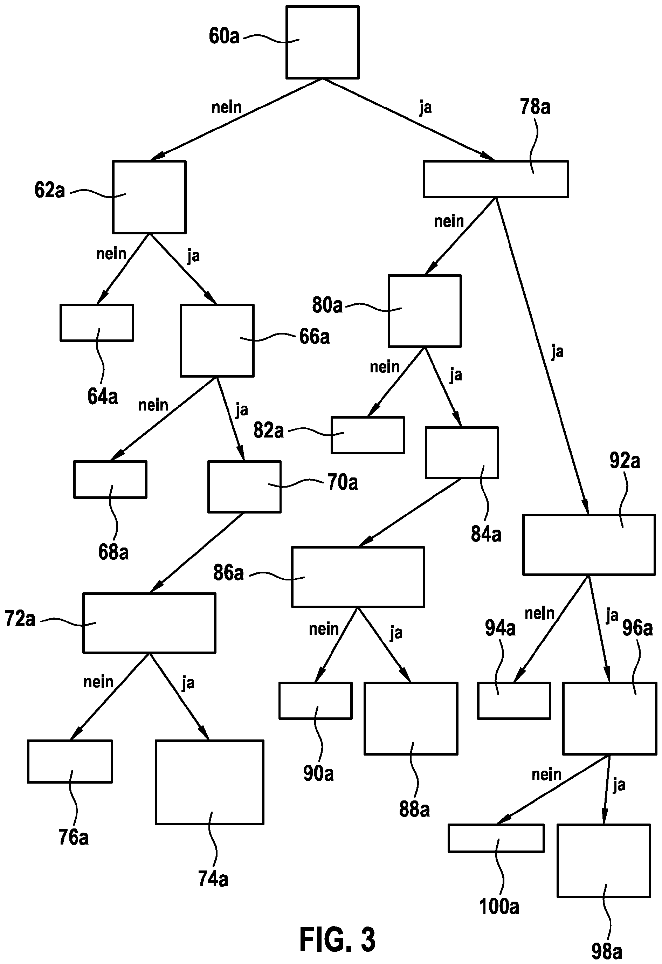

In der Figur 3 ist ein Verfahren dargestellt, das die Ortungsergebnisse der Ortungsvorrichtungen 14a, 24a, 26a, 28a verknüpft. In einem Verfahrensschritt 60a ermittelt die Recheneinheit 12a, ob die erste Ortungsvorrichtung 14a ein Ortungsobjekt 16a, 18a, 20a geortet hat. Wenn die erste Ortungsvorrichtung 14a kein Ortungsobjekt geortet hat, ermittelt die Recheneinheit 12a in einem nächsten Verfahrensschritt 62a, ob eine andere der Ortungsvorrichtungen 24a, 26a, 28a ein Ortungsobjekt 16a, 18a, 20a geortet hat. Wenn keine der anderen Ortungsvorrichtungen 24a, 26a, 28a ein Ortungsobjekt 16a, 18a, 20a geortet hat, gibt die Recheneinheit 12a in einem weiteren Verfahrensschritt 64a über die Anzeigeeinheit 52a an den Bediener aus, dass kein Ortungsobjekt gefunden wurde. Wenn zumindest eine der anderen Ortungsvorrichtungen 24a, 26a, 28a ein Ortungsobjekt 16a, 18a, 20a geortet hat, überprüft die Recheneinheit 12a in einem Verfahrensschritt 66a in einem gewählten Betriebsmodus den Zuverlässigkeitsindex dieser Ortungsvorrichtung 24a, 26a, 28a oder dieser Ortungsvorrichtungen 24a, 26a, 28a. Liegt der Zuverlässigkeitsindex dieser Ortungsvorrichtung 24a, 26a, 28a oder dieser Ortungsvorrichtungen 24a, 26a, 28a gemeinsam unter 50 % zeigt die Recheneinheit 12a in einem Verfahrensschritt 68a dem Bediener über die Anzeigeeinheit 52a an, dass kein Ortungsobjekt 16a, 18a, 20a gefunden wurde. Liegt der Zuverlässigkeitsindex dieser Ortungsvorrichtung 24a, 26a, 28a oder dieser Ortungsvorrichtungen 24a, 26a, 28a gemeinsam bei wenigstens 50 %, zeigt die Recheneinheit 12a in einem Verfahrensschritt 70a dem Bediener über die Anzeigeeinheit 52a an, dass ein Ortungsobjekt 16a, 18a, 20a gefunden wurde. In einem weiteren Verfahrensschritt 72a bestimmt die Recheneinheit 12a, ob Ortsinformationen 36a einer der Ortungsvorrichtungen 14a, 24a, 26a, 28a vorliegen. Des Weiteren bestimmt die Recheneinheit 12a, ob die Ortsinformationen 36a in der Summe einen Ortsbestimmungszuverlässigkeitsindex von wenigstens 50 % aufweisen. Wenn ja, zeigt die Recheneinheit 12a in einem Verfahrensschritt 74a dem Bediener über die Anzeigeeinheit 52a die Ortsinformation 36a an. Wenn nein, zeigt die Recheneinheit 12a in einem Verfahrensschritt 76a dem Bediener über die Anzeigeeinheit 52a keine Ortsinformation 36a an.

Wenn die erste Ortungsvorrichtung 14a ein Ortungsobjekt 16a, 18a, 20a geortet hat, ermittelt die Recheneinheit 12a in einem nächsten Verfahrensschritt 78a, ob eine der anderen Ortungsvorrichtungen 24a, 26a, 28a ein Ortungsobjekt 16a, 18a, 20a gefunden hat. Wenn keine der anderen Ortungsvorrichtungen 24a, 26a, 28a ein Ortungsobjekt 16a, 18a, 20a gefunden hat, überprüft die Recheneinheit 12a in einem weiteren Verfahrensschritt 80a, ob die erste Ortungsvorrichtung 14a in einem gewählten Betriebsmodus einen Zuverlässigkeitsindex von wenigstens 50 % aufweist. Wenn die Ortungsvorrichtung 14a einen Zuverlässigkeitsindex von weniger als 50 % aufweist, zeigt die Recheneinheit 12a in einem Verfahrensschritt 82a über die Anzeigeeinheit 52a keine Ortung eines Ortungsobjekts 16a, 18a, 20a an. Wenn die erste Ortungsvorrichtung 14a einen Zuverlässigkeitsindex von zumindest 50 % aufweist, zeigt die Recheneinheit 12a in einem Verfahrensschritt 84a über die Anzeigeeinheit 52a ein Vorhandensein eines Ortungsobjekts 16a, 18a, 20a an. In einem weiteren Verfahrensschritt 86a bestimmt die Recheneinheit 12a, ob Ortsinformationen 36a einer der Ortungsvorrichtungen 14a, 24a, 26a, 28a vorliegen. Des Weiteren bestimmt die Recheneinheit 12a, ob die Ortsinformationen 36a einen Ortsbestimmungszuverlässigkeitsindex in der Summe von wenigstens 50 % aufweisen. Wenn ja, zeigt die Recheneinheit 12a in einem Verfahrensschritt 88a dem Bediener über die Anzeigeeinheit 52a die Ortsinformation 36a an. Wenn nein, zeigt die Recheneinheit 12a in einem Verfahrensschritt 90a dem Bediener über die Anzeigeeinheit 52a die Ortsinformation 36a nicht an.

Wenn eine der anderen Ortungsvorrichtungen 24a, 26a, 28a ein Ortungsobjekt 16a, 18a, 20a gefunden hat, überprüft die Recheneinheit 12a in einem weiteren Verfahrensschritt 92a, ob Ortsinformationen 36a eines der Ortungsvorrichtungen 14a, 24a, 26a, 28a vorliegen. Wenn keine Ortsinformation 36a vorliegt, zeigt die Recheneinheit 12a in einem Verfahrensschritt 94a dem Bediener über die Anzeigeeinheit 52a nur das Vorhandensein eines Ortungsobjekts 16a, 18a, 20a an. Wenn eine Ortsinformation 36a vorliegt, überprüft die Recheneinheit 12a in einem Verfahrensschritt 96a einen Ortsbestimmungszuverlässigkeitsindex der Ortungsvorrichtungen 14a, 24a, 26a, 28a. Des Weiteren überprüft die Recheneinheit 12a, ob die Ortsinformationen 36a übereinstimmen. Ist des Weiteren ein Ortsbestimmungszuverlässigkeitsindex von wenigstens 50 % erreicht und die Ortsinformationen 36a stimmen überein, zeigt die Recheneinheit 12a in einem Verfahrensschritt 98a über die Anzeigeeinheit 52a die Ortsinformation 36a des Ortungsobjekts 16a, 18a, 20a an. Ansonsten zeigt die Recheneinheit 12a in einem Verfahrensschritt 100a über die Anzeigeeinheit 52a nur das Vorhandensein eines Ortungsobjekts 16a, 18a, 20a an.

Des Weiteren bestimmt die Recheneinheit 12a aus den Ortungsergebnissen der Ortungsvorrichtungen 14a, 24a, 26a, 28a die Eigenschaftsinformation 47a des Ortungsobjekts 16a, 18a, 20a. Die Recheneinheit gewichtet die Ortungsergebnisse der Ortungsvorrichtungen 14a, 24a, 26a, 28a bezüglich der Eigenschaftsinformation 47a. Des Weiteren überprüft die Recheneinheit 12a, ob der Eigenschaftsinformation 47a entsprechende Ortsinformationen 36a des Ortungsobjekts 16a, 18a, 20a zugeordnet werden können. Des Weiteren bestimmt die Recheneinheit 12a eine Plausibilitätsinformation zu jedem Ortungsobjekts. Die Recheneinheit 12a ermittelt, ob die Eigenschaftsinformation 47a konsistent ist. Beispielsweise erkennt die Recheneinheit 12a, wenn ein nichtmetallisches Ortungsobjekt eine Spannung aufweisen soll. In diesem Fall gibt die Recheneinheit 12a eine Warnung aus, die den Bediener darüber informiert, dass eine unzugeordnete Spannung im Ortungsbereich 32a der dritten Ortungsvorrichtung 26a oder zugeordnete gemessen wurde.

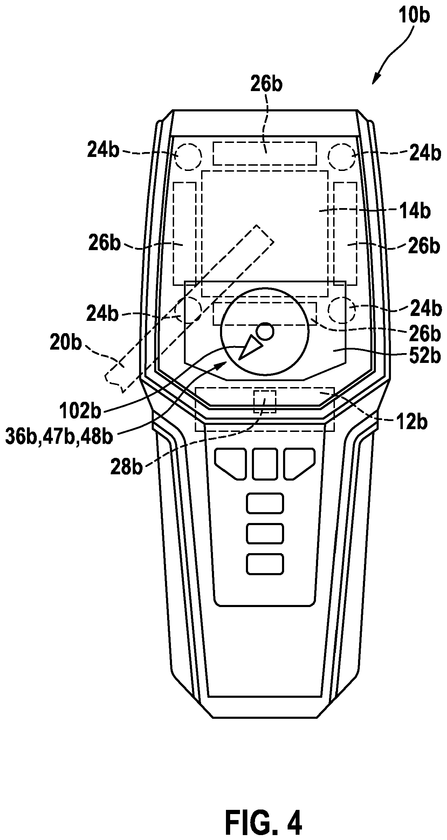

In den Figuren 4 bis 6 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch die Buchstaben b bis d ersetzt.

Figur 4 zeigt ein Handortungsgerät 10b mit einer Recheneinheit 12b, mit einer ersten Ortungsvorrichtung 14b, mit einer zweiten Ortungsvorrichtung 24b, mit einer dritten Ortungsvorrichtung 26b und mit einer vierten Ortungsvorrichtung 28b. Die Ortungsvorrichtungen 14b, 24b, 26b, 28b sind dazu vorgesehen, Ortungsobjekte 20b in Ortungsbereichen der Ortungsvorrichtungen 14b, 24b, 26b, 28b zu orten. Die hier nicht näher dargestellten Ortungsbereiche der Ortungsvorrichtungen 14b, 24b, 26b, 28b sind jeweils teilweise verschieden. Des Weiteren weist das Handortungsgerät 10b eine Anzeigeeinheit 52b auf. Die Anzeigeeinheit 52b zeigt dem Bediener bei einer Ortung Ortsinformationen 36b, Eigenschaftsinformationen 47b, Verlaufsinformationen 48b und/oder andere, dem Fachmann als sinnvoll erscheinende Informationen an. Die Recheneinheit 12b ist dazu vorgesehen, die durch Ortung ermittelten Informationen von einem eingestellten Betriebsmodus abhängig mittels der Anzeigeeinheit 52b darzustellen. Zudem ist die Recheneinheit 12b dazu vorgesehen, eine Eigenschaftsinformation 47b eines in einer Mitte des Ortungsbereichs angeordneten Ortungsobjekts 20b in einer Mitte eines Darstellungsbereichs der Anzeigeeinheit 52b darzustellen. Des Weiteren ist die Recheneinheit 12b dazu vorgesehen, eine Verlaufsinformation 48b des Ortungsobjekts 20b von der Mitte des Darstellungsbereichs der Anzeigeeinheit 52b ausgehend als Pfeil 102b darzustellen.

Die erste Ortungsvorrichtung 14b ist dazu vorgesehen, eine Radarortung vorzunehmen. Dazu weist die erste Ortungsvorrichtung 14b zumindest eine Ortungsantenne auf. Die zweite Ortungsvorrichtung 24b ist dazu vorgesehen, eine induktive Ortung vorzunehmen. Dazu weist die zweite Ortungsvorrichtung 24b vier Ortungsmittel auf, die als Spulen ausgebildet sind. Die Ortungsmittel sind an vier unterschiedlichen Ecken der ersten Ortungsvorrichtung 14b angeordnet. Die dritte Ortungsvorrichtung 26b ist dazu vorgesehen, eine Wechselspannungsortung vorzunehmen. Die dritte Ortungsvorrichtung 26b ist von der zweiten Ortungsvorrichtung getrennt ausgebildet. Die vierte Ortungsvorrichtung 28b ist dazu vorgesehen, eine kapazitive Ortung vorzunehmen. Dazu umfasst die vierte Ortungsvorrichtung 28b vier Messaufnehmer. Die Messaufnehmer sind als leitende Flächen ausgebildet. Die vierte Ortungsvorrichtung 28b ist von der ersten Ortungsvorrichtung 14b getrennt ausgebildet.

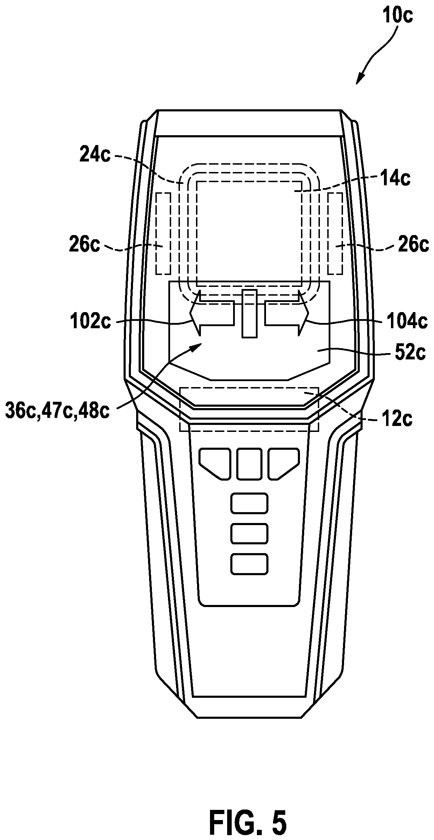

Figur 5 zeigt ein Handortungsgerät 10c mit einer Recheneinheit 12c, mit einer ersten Ortungsvorrichtung 14c, mit einer zweiten Ortungsvorrichtung 24c und mit einer dritten Ortungsvorrichtung 26c. Die Ortungsvorrichtungen 14c, 24c, 26c sind dazu vorgesehen, Ortungsobjekte in Ortungsbereichen der Ortungsvorrichtungen 14c, 24c, 26c zu orten. Die hier nicht näher dargestellten Ortungsbereiche der Ortungsvorrichtungen 14c, 24c, 26c sind jeweils teilweise verschieden. Des Weiteren weist das Handortungsgerät 10c eine Anzeigeeinheit 52c auf. Die Anzeigeeinheit 52c zeigt dem Bediener bei einer Ortung Ortsinformationen 36c, Eigenschaftsinformationen 47c und/oder andere, dem Fachmann als sinnvoll erscheinende Informationen an. Die Recheneinheit 12c ist dazu vorgesehen, die durch Ortung ermittelten Informationen von einem eingestellten Betriebsmodus abhängig mittels der Anzeigeeinheit 52c darzustellen. Die Recheneinheit 12c ist dazu vorgesehen, eine Eigenschaftsinformation 47c als eine Farbe darzustellen. Alternativ oder zusätzlich könnte ein Handortungsgerät eine Eigenschaftsinformation und/oder eine andere, dem Fachmann als sinnvoll erscheinende Information als einen Ton und/oder als eine Tonfolge mit einer oder mehreren Frequenzen bzw. Lautstärken ausgeben. Des Weiteren ist die Recheneinheit 12c dazu vorgesehen, eine Ortsinformation 36c des Ortungsobjekts 20c darzustellen.

Die erste Ortungsvorrichtung 14c ist dazu vorgesehen, eine Radarortung vorzunehmen. Dazu weist die erste Ortungsvorrichtung 14c zumindest eine Ortungsantenne auf. Die zweite Ortungsvorrichtung 24c ist dazu vorgesehen, eine induktive Ortung vorzunehmen. Dazu weist die zweite Ortungsvorrichtung 24c ein Ortungsmittel auf, das als Spule ausgebildet ist. Das Ortungsmittel umschließt die erste Ortungsvorrichtung 14c auf einer Ebene. Die dritte Ortungsvorrichtung 26c ist dazu vorgesehen, eine kapazitive Ortung vorzunehmen. Dazu umfasst die dritte Ortungsvorrichtung 26c zwei Messaufnehmer. Die Messaufnehmer sind als leitende Flächen ausgebildet. Die Messaufnehmer sind auf gegenüberliegenden Seiten der ersten Ortungsvorrichtung 14c angeordnet. Die Recheneinheit ist dazu vorgesehen, mittels der Anzeigeeinheit 52c dem Bediener anzuzeigen, ob ein Ortungsobjekt mittig oder außermittig oder mittig und außermittig angeordnet ist. Dazu wertet die Recheneinheit 12c Ortungsergebnisse zumindest der ersten Ortungsvorrichtung 14c und der dritten Ortungsvorrichtung 26c aus und berechnet eine Ortsinformation 36c und eine Verlaufsinformation 48c. Wenn ein Ortungsobjekt außermittig angeordnet ist, stellt die Recheneinheit 12c dies mittels der Anzeigeeinheit 52c in Form von Pfeilen 102c, 104c dar.

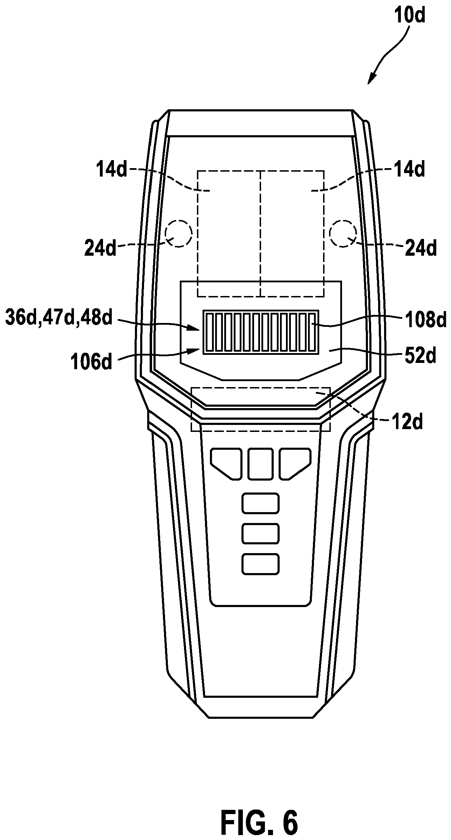

Figur 6 zeigt ein Handortungsgerät 10d mit einer Recheneinheit 12d, mit einer ersten Ortungsvorrichtung 14d und mit einer zweiten Ortungsvorrichtung 24d. Die Ortungsvorrichtungen 14d, 24d sind dazu vorgesehen, Ortungsobjekte in hier nicht näher dargestellten Ortungsbereichen der Ortungsvorrichtungen 14d, 24d zu orten. Die Ortungsbereiche der Ortungsvorrichtungen 14d, 24d sind jeweils teilweise verschieden. Des Weiteren weist das Handortungsgerät 10d eine Anzeigeeinheit 52d auf. Die Anzeigeeinheit 52d zeigt dem Bediener bei einer Ortung Ortsinformationen 36d, Eigenschaftsinformationen 47d und/oder andere, dem Fachmann als sinnvoll erscheinende Informationen an. Die Recheneinheit 12d ist dazu vorgesehen, die durch Ortung ermittelten Informationen von einem eingestellten Betriebsmodus abhängig mittels der Anzeigeeinheit 52d darzustellen. Die Recheneinheit 12d ist dazu vorgesehen, eine Eigenschaftsinformation 47d als eine Farbe darzustellen. Des Weiteren ist die Recheneinheit 12d dazu vorgesehen, eine von den Ortungsvorrichtungen 14d, 24d erfasste Ortsinformation 36d des Ortungsobjekts 20d in einer Skala 106d darzustellen. Balken 108d der Skala 106d sind Entfernungen des Ortungsobjekts zu einem mittig angeordneten Ortungsobjekt zugeordnet.

Die erste Ortungsvorrichtung 14d ist dazu vorgesehen, eine kapazitive Ortung vorzunehmen. Dazu weist die erste Ortungsvorrichtung 14d zwei Messaufnehmer auf. Die Messaufnehmer sind als leitende Flächen ausgebildet. Die zweite Ortungsvorrichtung 24d ist dazu vorgesehen, eine induktive Ortung vorzunehmen. Dazu weist die zweite Ortungsvorrichtung 24d zwei Ortungsmittel auf, die als Spulen ausgebildet sind. Die Ortungsmittel umschließen die erste Ortungsvorrichtung 14d auf einer Ebene. Die Ortungsmittel sind auf gegenüberliegenden Seiten der erste Ortungsvorrichtung 14d angeordnet.

## Patentansprüche

1. Handortungsgerät mit einer Recheneinheit (12a-d), mit einer ersten Ortungsvorrichtung (14a-d), die dazu vorgesehen ist, ein Ortungsobjekt (16a, 18a, 20a; 20b) zumindest in einem ersten Ortungsbereich (22a) zu orten, und mit wenigstens einer zweiten Ortungsvorrichtung (24a-d, 26a-d, 28a-b), die dazu vorgesehen ist, ein Ortungsobjekt (16a, 18a, 20a; 20b) in zumindest einem zweiten Ortungsbereich (30a, 32a, 34a) zu orten, wobei die Recheneinheit (12a-d) dazu vorgesehen ist, zumindest eine Ortsinformation (36a) wenigstens eines der Ortungsobjekte (16a, 18a, 20a; 20b) zumindest von einem Ortungsergebnis der ersten Ortungsvorrichtung (14a-d) und einem Ortungsergebnis der zweiten Ortungsvorrichtung (24a-d, 26a-d, 28a-b) abhängig zu bestimmen, und wobei die Recheneinheit (12a-d) dazu vorgesehen ist, in einem Betriebszustand das Vorhandensein eines der Ortungsobjekte (16a, 18a, 20a; 20b) nur auszugeben, wenn die zumindest zwei Ortungsvorrichtungen (14a-d, 24a-d, 26a-d, 28a-b) jeweils das Ortungsobjekt (16a, 18a, 20a; 20b) erfassen, **dadurch gekennzeichnet, dass** die erste Ortungsvorrichtung (14a-d) dazu vorgesehen ist, wenigstens eines der Ortungsobjekte (16a, 18a, 20a; 20b) mit einer ersten Ortungsart zu orten, die von einer zweiten Ortungsart der zweiten Ortungsvorrichtung (24a-d, 26a-d, 28a-b) verschieden ist.

2. Handortungsgerät nach Anspruch 1, **dadurch gekennzeichnet, dass** die erste Ortungsvorrichtung (14a-d) dazu vorgesehen ist, in zumindest einem ersten und einem zweiten Ortungsteilbereich (38a, 40a, 42a) des ersten Ortungsbereichs (22a) getrennt zu orten.

3. Handortungsgerät nach Anspruch 2, **dadurch gekennzeichnet, dass** die zweite Ortungsvorrichtung (24a-d) dazu vorgesehen ist, in zumindest einem ersten und einem zweiten Ortungsteilbereich (44a, 46a) des zweiten Ortungsbereichs (30a, 32a, 34a) getrennt zu orten.

4. Handortungsgerät nach einem der vorhergehenden Ansprüche, **dadurch gekennzeichnet, dass** die Recheneinheit (12a-d) dazu vorgesehen ist, in einem Betriebszustand die Ortsinformation (36a) wenigstens eines der Ortungsobjekte (16a, 18a, 20a; 20b) nur auszugeben, wenn die zumindest zwei Ortungsvorrichtungen (14a-d, 24a-d, 26a-d, 28a-b) jeweils das Ortungsobjekt (16a, 18a, 20a; 20b) erfassen.

5. Handortungsgerät nach einem der vorhergehenden Ansprüche, **dadurch gekennzeichnet, dass** die Recheneinheit (12a-b) dazu vorgesehen ist, zumindest eine Verlaufsinformation (48a-c) wenigstens eines der Ortungsobjekte (20a, 20b) zumindest von einem Ortungsergebnis der ersten Ortungsvorrichtung (14a, 14b) und einem Ortungsergebnis der zweiten Ortungsvorrichtung (24a, 26a, 28a; 24b, 26b, 28b) abhängig zu bestimmen.

6. Handortungsgerät nach einem der Ansprüche 1 bis 5, **dadurch gekennzeichnet, dass** die Recheneinheit (12a-d) dazu vorgesehen ist, zumindest eine Eigenschaftsinformation (47a-d) wenigstens eines der Ortungsobjekte (16a, 18a, 20a; 20b) zumindest von einem Ortungsergebnis der ersten Ortungsvorrichtung (14a-d) und einem Ortungsergebnis der zweiten Ortungsvorrichtung (24a-d, 26a-d, 28a-b) abhängig zu bestimmen.

7. Handortungsgerät nach einem der Ansprüche 1 bis 6, **dadurch gekennzeichnet, dass** die Recheneinheit (12a-d) dazu vorgesehen ist, zumindest eine Plausibilitätsinformation wenigstens von einem Ortungsergebnis der ersten Ortungsvorrichtung (14a-d) und einem Ortungsergebnis der zweiten Ortungsvorrichtung (24a-d, 26a-d, 28a-b) abhängig zu bestimmen.

8. Handortungsgerät nach einem der vorhergehenden Ansprüche, **dadurch gekennzeichnet, dass** die Recheneinheit (12a-d) dazu vorgesehen ist, zumindest das Ortungsergebnis der ersten Ortungsvorrichtung (14a-d) und das Ortungsergebnis der zweiten Ortungsvorrichtung (24a-d, 26a-d, 28a-b) unterschiedlich zu gewichten.

9. Handortungsgerät nach Anspruch 8, **dadurch gekennzeichnet, dass** die Recheneinheit (12a-d) dazu vorgesehen ist, unterschiedliche Gewichtungen der Ortungsergebnisse der ersten Ortungsvorrichtung (14a-d) und der zweiten Ortungsvorrichtung (24a-d, 26a-d, 28a-b) in verschiedenen Betriebsmodi vorzunehmen.

10. Verfahren zur Ortung mit einem Handortungsgerät (10a-d), insbesondere nach einem der vorhergehenden Ansprüche, das eine Recheneinheit (12a-d), eine erste Ortungsvorrichtung (14a-d), die in zumindest einem Betriebszustand ein Ortungsobjekt (16a, 18a, 20a; 20b) zumindest in einem ersten Ortungsbereich (22a) ortet, und wenigstens eine zweite Ortungsvorrichtung (24a-d, 26a-d, 28a-b) aufweist, die in zumindest einem Betriebszustand ein Ortungsobjekt (16a, 18a, 20a; 20b) in zumindest einem zweiten Ortungsbereich (30a, 32a, 34a) ortet, wobei die Recheneinheit (12a-d) zumindest eine Ortsinformation (36a) des Ortungsobjekts (16a, 18a, 20a; 20b) wenigstens von einem Ortungsergebnis der ersten Ortungsvorrichtung (14a-d) und einem Ortungsergebnis der zweiten Ortungsvorrichtung (24a-d, 26a-d, 28a-b) abhängig bestimmt, wobei in einem Betriebszustand das Vorhandensein eines der Ortungsobjekte (16a, 18a, 20a; 20b) durch die Recheneinheit (12a-d) nur ausgegeben wird, wenn das Ortungsobjekt (16a, 18a, 20a; 20b) durch die zumindest zwei Ortungsvorrichtungen (14a-d, 24a-d, 26a-d, 28a-b) jeweils erfasst wird, und wobei wenigstens eines der Ortungsobjekte (16a, 18a, 20a; 20b) durch die erste Ortungsvorrichtung (14a-d) mit einer ersten Ortungsart geortet wird, die von einer zweiten Ortungsart der zweiten Ortungsvorrichtung (24a-d, 26a-d, 28a-b) verschieden ist.

## Claims

1. Hand-held locating appliance having a computation unit (12a-d), having a first locating apparatus (14a-d) that is provided for the purpose of locating a locatable object (16a, 18a, 20a; 20b) at least in a first locating region (22a), and having at least one second locating apparatus (24a-d, 26a-d, 28a-b) that is provided for the purpose of locating a locatable object (16a, 18a, 20a; 20b) in at least one second locating region (30a, 32a, 34a), wherein the computation unit (12a-d) is provided for the purpose of determining at least one piece of locating information (36a) for at least one of the locatable objects (16a, 18a, 20a; 20b) at least on the basis of a locating result from the first locating apparatus (14a-d) and a locating result from the second locating apparatus (24a-d, 26a-d, 28a-b), and wherein the computation unit (12a-d) is provided for the purpose of outputting the presence of one of the locatable objects (16a, 18a, 20a; 20b) in one operating state only if the at least two locating apparatuses (14a-d, 24a-d, 26a-d, 28a-b) each sense the locatable object (16a, 18a, 20a; 20b), **characterized in that** the first locating apparatus (14a-d) is provided for the purpose of locating at least one of the locatable objects (16a, 18a, 20a; 20b) using a first type of locating that differs from a second type of locating by the second locating apparatus (24a-d, 26a-d, 28a-b).

2. Hand-held locating appliance according to Claim 1, **characterized in that** the first locating apparatus (14a-d) is provided for the purpose of locating in at least a first and a second locating subregion (38a, 40a, 42a) of the first locating region (22a) separately.

3. Hand-held locating appliance according to Claim 2, **characterized in that** the second locating apparatus (24a-d) is provided for the purpose of locating in at least a first and a second locating subregion (44a, 46a) of the second locating region (30a, 32a, 34a) separately.

4. Hand-held locating appliance according to one of the preceding claims, **characterized in that** the computation unit (12a-d) is provided for the purpose of outputting the locating information (36a) for at least one of the locatable objects (16a, 18a, 20a; 20b) in one operating state only if the at least two locating apparatuses (14a-d, 24a-d, 26a-d, 28a-b) each sense the locatable object (16a, 18a, 20a; 20b) .

5. Hand-held locating appliance according to one of the preceding claims, **characterized in that** the computation unit (12a-b) is provided for the purpose of determining at least one piece of profile information (48a-c) for at least one of the locatable objects (20a, 20b) at least on the basis of a locating result from the first locating apparatus (14a, 14b) and a locating result from the second locating apparatus (24a, 26a, 28a; 24b, 26b, 28b) .

6. Hand-held locating appliance according to one of Claims 1 to 5, **characterized in that** the computation unit (12a-d) is provided for the purpose of determining at least one piece of property information (47a-d) for at least one of the locatable objects (16a, 18a, 20a; 20b) at least on the basis of a locating result from the first locating apparatus (14a-d) and a locating result from the second locating apparatus (24a-d, 26a-d, 28a-b).

7. Hand-held locating appliance according to one of Claim 1 to 6, **characterized in that** the computation unit (12a-d) is provided for the purpose of determining at least one piece of plausibility information at least on the basis of a locating result from the first locating apparatus (14a-d) and a locating result from the second locating apparatus (24a-d, 26a-d, 28a-b).

8. Hand-held locating appliance according to one of the preceding claims, **characterized in that** the computation unit (12a-d) is provided for the purpose of weighting at least the locating result from the first locating apparatus (14a-d) and the locating result from the second locating apparatus (24a-d, 26a-d, 28a-b) differently.

9. Hand-held locating appliance according to Claim 8, **characterized in that** the computation unit (12a-d) is provided for the purpose of performing different weightings for the locating results of the first locating apparatus (14a-d) and the second locating apparatus (24a-d, 26a-d, 28a-b) in different modes of operation.

10. Method for locating with a hand-held locating appliance (10a-d), particularly according to one of the preceding claims, that has a computation unit (12a-d), a first locating apparatus (14a-d), which locates a locatable object (16a, 18a, 20a; 20b) at least in a first locating region (22a) in at least one operating state, and at least one second locating apparatus (24a-d, 26a-d, 28a-b), which locates a locatable object (16a, 18a, 20a; 20b) in at least one second locating region (30a, 32a, 34a) in at least one operating state, wherein the computation unit (12a-d) determines at least one piece of locating information (36a) for the locatable object (16a, 18a, 20a; 20b) at least on the basis of a locating result from the first locating apparatus (14a-d) and a locating result from the second locating apparatus (24a-d, 26a-d, 28a-b), wherein in one operating state the presence of one of the locatable objects (16a, 18a, 20a; 20b) is output by the computation unit (12a-d) only if the at least two locating apparatuses (14a-d, 24a-d, 26a-d, 28a-b), and wherein at least one of the locatable object (16a, 18a, 20a; 20b) and wherein at least one of the locatable objects (16a, 18a, 20a; 20b) is located by the first locating apparatus (14a-d) using a first type of locating that differs from a second type of locating by the second locating apparatus (24a-d, 26a-d, 28a-b).

## Revendications

1. Appareil portable de localisation doté d'une unité de calcul (12a-d), d'un premier ensemble de localisation (14a-d) prévu pour localiser un objet (16a, 18a, 20a; 20b) à localiser dans au moins une première zone de localisation (22a) et d'au moins un deuxième ensemble de localisation (24a-d, 26a-d, 28a-b) conçu pour localiser un objet (16a, 18a, 20a; 20b) à localiser dans au moins une deuxième zone de localisation (30a, 32a, 34a), l'unité de calcul (12a-d) étant prévue pour déterminer au moins une information de localisation (36a) d'au moins l'un des objets (16a, 18a, 20a; 20b) à localiser à partir d'au moins un résultat de localisation du premier ensemble de localisation (14a-d) et un résultat de localisation du deuxième ensemble de localisation (24a-d, 26a-d, 28a-b), l'unité de calcul (12a-d) étant prévue pour, dans une situation de fonctionnement, ne sortir la présence de l'un des objets (16a, 18a, 20a; 20b) à localiser que si les deux ou plusieurs ensembles de localisation (14a-d, 24a-d, 26a-d, 28a-b) ont tous saisi l'objet (16a, 18a, 20a; 20b) à localiser,
**caractérisé en ce que**
le premier ensemble de localisation (14a-d) est prévu pour localiser au moins l'un des objets (16a, 18a, 20a; 20b) à localiser par un premier type de localisation différent d'un deuxième type de localisation du deuxième ensemble de localisation (24a-d, 26a-d, 28a-b).

2. Appareil portable de localisation selon la revendication 1, **caractérisé en ce que** le premier ensemble de localisation (14a-d) est prévu pour localiser séparément dans au moins une première et une deuxième partie (38a, 40a, 42a) de la première zone de localisation (22a).

3. Appareil portable de localisation selon la revendication 2, **caractérisé en ce que** le deuxième ensemble de localisation (24a-d) est prévu pour localiser séparément dans au moins une première et une deuxième partie (44a, 46a) de la deuxième zone de localisation (30a, 32a, 34a).

4. Appareil portable de localisation selon l'une des revendications précédentes, **caractérisé en ce que** l'unité de calcul (12a-d) est prévue pour, dans une situation de fonctionnement, ne sortir l'information de localisation (36a) d'au moins l'un des objets (16a, 18a, 20a; 20b) à localiser que si les deux ou plusieurs ensembles de localisation (14a-d, 24a-d, 26a-d, 28a-b) ont tous saisi l'objet (16a, 18a, 20a; 20b) à localiser.

5. Appareil portable de localisation selon l'une des revendications précédentes, **caractérisé en ce que** l'unité de calcul (12a-b) est prévue pour déterminer au moins une information de déroulement (48a-c) d'au moins l'un des objets (20a; 20b) à localiser en fonction d'au moins un résultat de localisation du premier ensemble de localisation (14a, 14b) et d'un résultat de localisation du deuxième ensemble de localisation (24a, 26a, 28a; 24b, 26b, 28b).

6. Appareil portable de localisation selon l'une des revendications 1 à 5, **caractérisé en ce que** l'unité de calcul (12a-d) est prévue pour déterminer au moins une information des propriétés (47a-d) d'au moins l'un des objet (16a, 18a, 20a; 20b) à localiser en fonction d'au moins un résultat de localisation du premier ensemble de localisation (14a-d) et d'un résultat de localisation du deuxième ensemble de localisation (24a-d, 26a-d, 28a-b).

7. Appareil portable de localisation selon l'une des revendications 1 à 6, **caractérisé en ce que** l'unité de calcul (12a-d) est prévue pour déterminer au moins une information de plausibilité en fonction d'au moins un résultat de localisation du premier ensemble de localisation (14a-d) et d'un résultat de localisation du deuxième ensemble de localisation (24a-d, 26a-d, 28a-b).

8. Appareil portable de localisation selon l'une des revendications précédentes, **caractérisé en ce que** l'unité de localisation (12a-d) est prévue pour pondérer différemment le résultat de localisation du premier ensemble de localisation (14a-d) et le résultat de localisation du deuxième ensemble de localisation (24a-d, 26a-d, 28a-b).

9. Appareil portable de localisation selon la revendication 8, **caractérisé en ce que** l'unité de localisation (12a-d) est prévue pour appliquer dans différents modes de fonctionnement des pondérations différentes des résultats de localisation du premier ensemble de localisation (14a-d) et du deuxième ensemble de localisation (24a-d, 26a-d, 28a-b).

10. Procédé de localisation à l'aide d'un appareil portable de localisation (10a-d), en particulier selon l'une des revendications précédentes, qui présente une unité de calcul (12a-d), un premier ensemble de localisation (14a-d) prévu pour localiser un objet (16a, 18a, 20a; 20b) à localiser dans au moins une première zone de localisation (22a) et au moins un deuxième ensemble de localisation (24a-d, 26a-d, 28a-b) conçu pour localiser un objet (16a, 18a, 20a; 20b) à localiser dans au moins une deuxième zone de localisation (30a, 32a, 34a),
l'unité de calcul (12a-d) étant prévue pour déterminer au moins une information de localisation (36a) d'au moins l'un des objets (16a, 18a, 20a; 20b) à localiser à partir d'au moins un résultat de localisation du premier ensemble de localisation (14a-d) et un résultat de localisation du deuxième ensemble de localisation (24a-d, 26a-d, 28a-b), l'unité de calcul (12a-d) étant prévue pour, dans une situation de fonctionnement, ne sortir la présence de l'un des objets (16a, 18a, 20a; 20b) à localiser que si l'objet (16a, 18a, 20a; 20b) à localiser a été saisi par chacun des deux ou plusieurs ensembles de localisation (14a-d, 24a-d, 26a-d, 28a-b), au moins l'un des objets (16a, 18a, 20a; 20b) à localiser étant localisé par le premier ensemble de localisation (14a-d) dans un premier type de localisation différent d'un deuxième type de localisation du deuxième ensemble de localisation (24a-d, 26a-d, 28a-b).
